# EUROPEAN PATENT APPLICATION

(11) **EP 2 199 892 A2**
(43) Date of publication of application: **23.06.2010**
(21) Application number: 09173809.6
(22) Date of filing: 22.10.2009
(51) Int. Cl.: G06F 3/042

(54) **Object information providing apparatus, object awareness apparatus, and object awareness system**

(30) Priority: 22.12.2008 KR 20080131263
(71) Applicant: Samsung Electronics Co., Ltd., Suwon-si, Gyeonggi-do 442-742 (KR)
(72) Inventor: Seo, Young-kwang, Seoul (KR); Cho, Seong-il, Seoul (KR); Kang, Jung-min, Seoul (KR); Jeong, Ki-jun, Seoul (KR)
(74) Representative: Grootscholten, Johannes A.M.

(57) **Abstract**

An object information providing apparatus and an object awareness apparatus are provided. The object information providing apparatus includes at least one light emitting element and controls a light emitting state of the at least one light emitting element so as to provide information of an object to the object awareness apparatus in the form of light. Accordingly, the object information providing apparatus provides information of a diverse number of different objects and the object awareness apparatus recognizes the information of the different objects such that the object awareness apparatus becomes aware of the identity and the location of the different objects.

## Description

### BACKGROUND OF THE INVENTION

### 1. Field of the Invention

Apparatuses and methods consistent with the present invention relate to an object information providing apparatus, an object awareness apparatus, and an object awareness system, and more particularly, an object information providing apparatus, an object awareness apparatus, and an object awareness system which provide and are aware of information and location of an object.

### 2. Description of the Related Art

Recently, a tabletop, which is a computer device of a table shape, has come into the market. The tabletop provides not only basic functions of a computer but also a user menu displayed on a display screen on the upper part of the table using various graphical user interfaces (GUIs). Particularly, the tabletop is aware of an object placed on the screen via detection and provides a menu associated with the object to the GUI so that the user can use a more intuitive interface using the tabletop.

The tabletop is aware of information and location of an object by detecting the shape or pattern of a visual tag which is printed on the surface of the object contacting the screen. The visual tag refers to a pattern printed on an area of a specific surface of an object.

However, if the visual tag is printed on one surface of an object, the information that can be shown by the visual tag is limited. For example, the number of visual tags provided by Microsoft is limited to 256. That is, there is a limit to the method of using the visual tag to display information of an object.

Therefore, there is a demand for a method for more diversely providing information of an object.

### SUMMARY OF THE INVENTION

Exemplary embodiments of the present invention may overcome the above disadvantages and other disadvantages not described above. Also, the present invention is not required to overcome the disadvantages described above, and an exemplary embodiment of the present invention may not overcome any of the problems described above.

The present invention provides an object information providing apparatus, which comprises at least one light emitting element and a controller which controls a light emitting state of the at least one light emitting element so as to provide information of an object to an object awareness apparatus in the form of light.

The present invention also provides an object awareness apparatus which detects the light emitted from an object information providing apparatus and recognizes object information and object location of an object based on the detected light.

The present invention also provides an object awareness system which comprises an object information providing apparatus and an object awareness apparatus.

Consistent with an aspect of the present invention, an object information providing apparatus which provides information about an object to an object awareness apparatus, comprises a light emitter which comprises at least one light emitting element, and a controller which controls a light emitting state of the at least one light emitting element so as to provide information of an object to the object awareness apparatus in the form of light.

The controller may change the light emitting state of the at least one light emitting element in order to change information indicated by the light emitter to coincide with information related to one object among different objects.

The object information providing apparatus may be mounted on the object and the information of the object may be information of the object on which the object information providing apparatus is mounted.

The light emitter may comprise a single light emitting element, and the controller may change brightness of the light emitting element for a predetermined time so as to provide information of an object which is determined according to a brightness variation pattern of the light emitting element for the predetermined time.

The controller may control the light emitting element to display a first brightness variation pattern representing a start during a first period within the predetermined time and display a second brightness variation pattern presenting identification (ID) information of the object during a second period within the predetermined time.

The object information providing apparatus may further comprise a photo sensor which detects light projected from the object awareness apparatus, and the controller may determine an ID of the object based on a beacon signal which is detected by the photo sensor. Thereafter, the controller sets the second brightness variation pattern according to the determined ID.

The object information providing apparatus may further comprise a wireless communication interface which is communicably connected with the object awareness apparatus, and the controller may transmit internet protocol (IP) information of the object to the object awareness apparatus through the wireless communication interface.

The light emitter may comprise two or more light emitting elements, and the controller may regulate brightness of each of the two or more light emitting elements, together or independently, to provide information of an object which is determined according to a light emitting pattern formed by the two or more light emitting elements.

The light emitter may comprise two or more light emitting elements, and the controller may change brightness of each of the two or more light emitting elements, together or independently, for a predetermined time to provide information of an object which is determined according to a light emitting pattern and a brightness variation pattern which are formed by the two or more light emitting elements for the predetermined time.

The object information providing apparatus may further comprise a LCD panel, and the light emitter may provide a backlight to the LCD panel and the controller may control the LCD panel to display a specific pattern to provide information of an object which is determined by the pattern displayed by the LCD panel.

The light emitting element may be an infrared light emitting element.

The light emitting element and the controller may be embedded in the object.

Consistent with another aspect of the present invention, an object awareness apparatus which receives information of an object from an object information providing apparatus and is aware of the object, comprises a photo sensor which detects light emitted from the object information providing apparatus, and a controller which recognizes object information and object location of the object based on the detected light.

The object awareness apparatus may further comprise a display unit which displays a specific image on a screen, and the controller may recognize information of the object and location of the object on the screen based on the detected light when the object information providing apparatus is placed on the screen.

If one light is detected, the controller may recognize information of the object based on a brightness variation pattern of the detected light emitted for a predetermined time.

The controller may recognize a first brightness variation pattern representing the start of awareness during a first period within the predetermined time, and may recognize a second brightness variation pattern representing ID information of the object during a second period within the predetermined time.

The object awareness apparatus may further comprise a light emitting element which projects light onto the object information providing apparatus, and the controller may provide a beacon signal to the object information providing apparatus through the light emitting element.

The object awareness apparatus may further comprise a wireless communication interface which is communicably connected to the object information providing apparatus, and the controller may receive IP information of the object from the object information providing apparatus through the wireless communication interface.

If two or more lights are detected, the controller may determine information of the object based on a light emitting pattern formed by the two or more detected lights.

If two or more lights are detected, the controller may determine information of the object based on a light emitting pattern and a brightness variation pattern which are formed by the two or more detected lights for a predetermined time.

If the detected light is light of a display image of the object information providing apparatus, the controller may determine information of the object based on the detected display image.

Consistent with still another aspect of the present invention, an object awareness system, comprises an object information providing apparatus which comprises at least one light emitting element which projects light and a first controller which controls a light emitting state of the at least one light emitting element so as to provide information of an object in the form of light, and an object awareness apparatus which comprises a photo sensor which detects light emitted from the object information providing apparatus, and a second controller which recognizes object information and object location of the object based on the detected light.

### BRIEF DESCRIPTION OF THE DRAWING FIGURES

The above and/or other aspects of the present invention will be more apparent by describing certain exemplary embodiments of the present invention with reference to the accompanying drawings, in which:
FIG. 1 is a diagram illustrating an interior of an object awareness system consistent with an exemplary embodiment of the present invention;
FIG. 2A is a block diagram illustrating an object information providing apparatus and an object awareness apparatus consistent with an exemplary embodiment of the present invention;
FIG. 2B is a block diagram illustrating an object information providing apparatus which further comprises a first photo sensor and an object awareness apparatus which further comprises a second light emitter consistent with an exemplary embodiment of the present invention;
FIG. 2C is a block diagram illustrating an object information providing apparatus and an object awareness apparatus each of which further comprises a wireless communication interface consistent with an exemplary embodiment of the present invention;
FIG. 3A is a view illustrating an object information providing apparatus which is mounted on an exterior of an object consistent with an exemplary embodiment of the present invention;
FIG. 3B is a view illustrating an object information providing apparatus which is embedded in an object consistent with another exemplary embodiment of the present invention;
FIG. 4 is a view schematically illustrating a process of transmitting information of an object if a single light emitting element is included according to a first exemplary embodiment of the present invention;
FIG. 5 is a graph showing a method for displaying a starting pattern and identification information by varying the brightness of the single light emitting element consistent with the first exemplary embodiment of the present invention;
FIG. 6 is a flowchart illustrating a process of allocating identifications to two objects consistent with the first exemplary embodiment of the present invention;
FIG. 7 is a flowchart illustrating a process of allocating identification if an object has an unchangeable identification consistent with the first exemplary embodiment of the present invention;
FIG. 8 is a flowchart illustrating a process of displaying a GUI on a screen to change identification if the identification is duplicated;
FIG. 9 is a flowchart illustrating a process of transmitting IP information using a wireless LAN and Bluetooth consistent with the first exemplary embodiment of the present invention;
FIG. 10 is a flowchart illustrating a process of allocating identification using a wireless LAN and Bluetooth if the identification is duplicated consistent with the first exemplary embodiment of the present invention;
FIGS. 11A and 11B are views illustrating a light emitting pattern when there are, for example, 9 light emitting elements consistent with a second exemplary embodiment of the present invention; and
FIGS. 12A and 12B are views illustrating a pattern displayed on a LCD screen which is included in an object information providing apparatus consistent with a third exemplary embodiment of the present invention.

### DETAILED DESCRIPTION OF THE EXEMPLARY EMBODIMENTS

Hereinafter, exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the exemplary embodiments of the present invention can be carried out without those specifically defined matters. Also, well-known functions or constructions are not described in detail since they would obscure the invention with unnecessary detail.

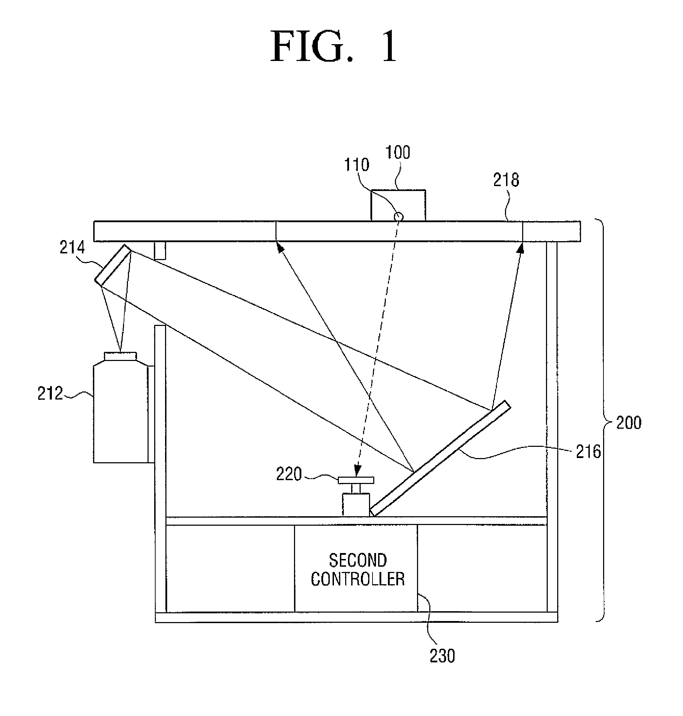

FIG. 1 is a diagram illustrating an interior of an object awareness system consistent with an exemplary embodiment of the present invention. FIG. 1 illustrates a simplified configuration of an interior of an object awareness system and not all the components are illustrated.

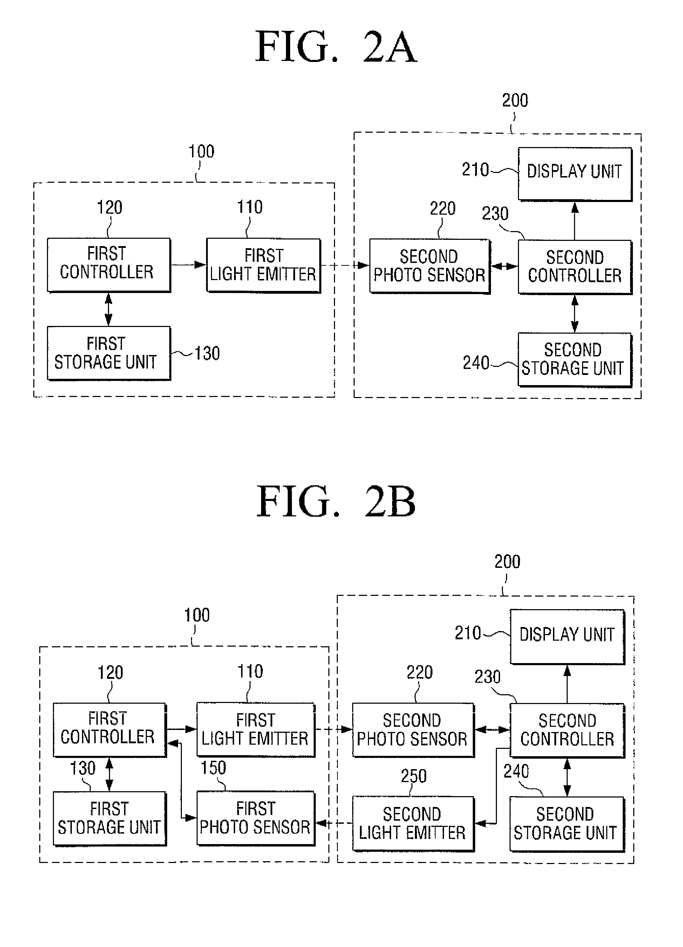

As shown in FIG. 1, an object awareness system comprises an object information providing apparatus 100 and an object awareness apparatus 200. The object information providing apparatus 100 comprises a first light emitter 110. The object awareness apparatus 200 comprises a projector 212, a first reflective mirror 214, a second reflective mirror 216, a screen 218, a second photo sensor 220, and a second controller 230. The projector 212, the first reflective mirror 214, the second reflective mirror 216, and the screen 218 constitute a display unit 200 of FIGS. 2A-2C.

The object information providing apparatus 100 is placed on the screen 218 of the object awareness apparatus 200. The first light emitter 110 of the object information providing apparatus 100 projects light onto the second photo sensor 220 of the object awareness apparatus 200. The first light emitter 100 emits light of various types, for example, infrared light.

The object information providing apparatus 100 controls the light emitting state of light emitted from the first light emitter 110 and provides the information of an object in the form of light to the object awareness apparatus 200. More specifically, the light emitted from the first light emitter 110 passes through the screen 218 and is projected onto the second photo sensor 220. That is, the object information providing apparatus 100 provides the object information of an object to the object awareness apparatus 200 using the light.

The information of an object comprises identification information of an object and location information of an object. The identification information of an object indicates what the object is. The identification information of an object may comprise type, model name, and/or serial number of an object. The location information of an object may comprise location coordinate information of an object with respect to the placement of the object on the screen 218.

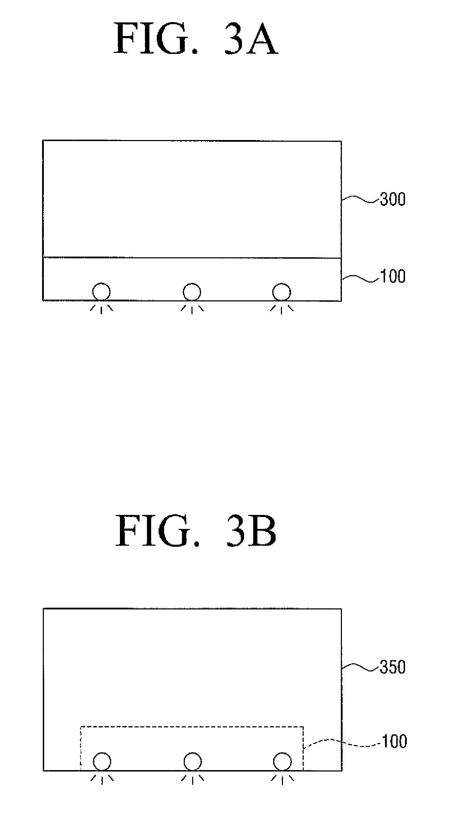

The object refers to an object having the object information providing apparatus 100 mounted on the exterior thereof or an object having the object information providing apparatus 100 embedded therein. The object information providing apparatus 100 mounted on the exterior of an object is illustrated in FIG. 3A and the object information providing apparatus 100 embedded in an object is illustrated in FIG. 3B.

If the object information providing apparatus 100 is mounted on the exterior of an object, the information of an object is information about the object on which the object information providing apparatus 100 is mounted. If the object information providing apparatus 100 is embedded in an object, the information of an object is information about the object information providing apparatus 100 or information about the object.

The projector 212 projects light regarding an image to be displayed. The light projected from the projector 212 is reflected from the first reflective mirror 214 and the second reflective mirror 216 and is projected onto the screen 218. Through such a process, the image is displayed on the screen 218.

The second photo sensor 220 detects the light projected from the object information providing apparatus 100. The second controller 230 controls the entire operation of the object awareness apparatus 200. The second photo sensor 220 and the second controller 230 will be described in detail with reference to FIG. 2A below.

As described above, the object awareness apparatus 200 detects the light projected from the object information providing apparatus 100 so that the object awareness system is aware of and recognizes an object. Also, since the object information providing apparatus 100 forms diverse patterns using a light emitting element included therein, the object information providing apparatus 100 can provide information of an object more diversely and in more detail. Since the object awareness apparatus 200 receives the information of an object based on the light emitted from the object information providing apparatus 100, the object awareness apparatus 200 can be of aware of and recognize more diverse types of objects, including a larger number of objects.

Although the display unit 210 of the object awareness apparatus 200 is operated in a projection method in this embodiment, any display method can be applied. For example, the display unit 210 may be operated in a LCD method in place of the projection method.

Hereinafter, the object information providing apparatus 100 and the object awareness apparatus 200 will be described in detail with reference to FIG. 2A. FIG. 2A is a block diagram illustrating the object information providing apparatus 100 and the object awareness apparatus 200 according to an exemplary embodiment of the present invention.

As shown in FIG. 2A, the object information providing apparatus 100 comprises the first light emitter 110, a first controller 120, and a first storage unit 130.

The first light emitter 110 emits light in various patterns, thereby providing information of an object using light. More specifically, the first light emitter 110 projects light of a specific pattern onto the second photo sensor 220 of the object awareness apparatus 200, thereby providing information of an object to the object awareness apparatus 200.

The first light emitter 110 comprises at least one light emitting element. As the number of the light emitting elements increases, the type of information that can be provided by the first light emitter 110 becomes diversified. However, if the number of light emitting elements increases, the area occupied by the first light emitter 110 is enlarged.

The light emitting elements included in the first light emitter 110 are spaced apart from one another by a specific distance. The specific distance is a minimum distance that can allow the second photo sensor 220 of the object awareness apparatus 200 to discriminate between two light emitting elements.

Any element can be used as the light emitting element of the first light emitter 110 if it can project light. For example, an infrared light emitting diode (LED) may be used.

The first controller 120 controls the light emitting state of the at least one light emitting element so as to provide information of an object to the object awareness apparatus 200 in the form of light. The light emitting state refers to at least one of a brightness of light emitted from the light emitting element, an on/off state, and a flickering state. More specifically, the first controller 120 converts a code corresponding to specific information into an electric signal to drive the first light emitter 110 and controls the light emitting state of the first light emitter 110 according to the code.

Also, the first controller 120 may change the light emitting state of the at least one light emitting element included in the first light emitter 110 to change information displayed by the first light emitter 110. For example, the first controller 120 changes a specific light emitting element included in the first light emitter 110 from the on-state to the flickering state.

If the object information providing apparatus 100 is mounted on the exterior of an object, the information displayed by the first light emitter 110 should be changed when the object mounted on the object information providing apparatus 100 is changed. Accordingly, the first controller 120 can change the light emitting state of the at least one light emitting element included in the first light emitter 110.

The light emitting state may be changed according to a command input through a user interface (not shown) provided on the object information providing apparatus 100. The user interface may be a button provided on the outer surface of the object information providing apparatus 100. Also, the first controller 120 may receive a command from a user via wire or wireless communication and accordingly may change the light emitting state of the first light emitter 110.

The first storage unit 130 stores a code representing information of an object. Also, the first storage unit 130 may store information of a plurality of diverse objects.

Due to the configuration described above, the object information providing apparatus 100 can provide the information of an object to the object awareness apparatus 200 in the form of light.

As shown in FIG. 2A, the object awareness apparatus 200 comprises the display unit 210, the second photo sensor 220, the second controller 230 and a second storage unit 240.

The display unit 210 displays a specific image on the screen. The display unit 210 may be realized in diverse methods, for example, in a projection method or a LCD method. The object information providing apparatus 100 is placed on the screen of the display unit 210.

The second photo sensor 220 detects the light emitted from the first light emitter 110 of the object information providing apparatus 100. If the light emitted from the first light emitter 110 is infrared light, the second photo sensor 220 is equipped with an infrared pass filter to detect only the infrared light.

The second photo sensor 220 may comprise a plurality of pixel components. Any sensor can be used as the second photo sensor 220 if it can detect light. For example, a charge-coupled device (CCD) photo sensor or a complementary metal-oxide semiconductor (CMOS) photo sensor may be used.

The second controller 230 recognizes the information of an object based on the detected light. The information of an object comprises identification information of an object and location information of the object. The identification information of an object indicates what the object is. The identification information of an object comprises type of an object (e.g., a mobile phone or a digital camera), a model name of an object, a serial number of an object. The location information of an object comprises location coordinate information of the object with respect to the placement of the object on the screen 218.

More specifically, the second controller 230 is aware of identification information and location information of an object by recognition based on the light detected by the second photo sensor 220 when the object information providing apparatus 100 is placed on the screen of the display unit 210. For example, the second controller 230 recognizes identification information of an object based on a brightness variation pattern of detected light. Also, the second controller 230 recognizes the location of an object based on which pixel, among the pixels included in the second photo sensor 220, detects the light.

The second controller 230 may control the display unit 210 to display a menu associated with the object on or near the location of the object. For example, if the object is a mobile phone, the second controller 230 may control a telephone number list to be displayed on the screen. Also, if the object is a digital camera, the second controller 230 controls a photo list stored in the screen to be displayed on the screen.

The second storage unit 240 stores information of a plurality of diverse objects. The second storage unit 240 provides data regarding the information of an object when the second controller 230 recognizes the object based on the detected light.

As described above, based on the light emitted from the object information providing apparatus 100, the object awareness apparatus 200 is aware of the object which is placed on the screen of the display unit 210 by recognition.

Hereinafter, the object information providing apparatus 100 which is mounted on the exterior of an object or is embedded in an object will be described with reference to FIGS. 3A and 3B.

FIG. 3A illustrates the object information providing apparatus 100 which is mounted on the exterior of an object 300 according to an exemplary embodiment of the present invention. As shown in FIG. 3A, the object information providing apparatus 100 is mounted on the outer surface of the object 300.

Accordingly, the object information providing apparatus 100 may comprise a mounting portion to be mounted on the outer surface of the object 300. The mounting portion may be realized in the form of prominence and depression or in the form of adhesive.

FIG. 3B illustrates the object information providing apparatus 100 embedded in the object 350 according to another exemplary embodiment of the present invention. As shown in FIG. 3B, the object information providing apparatus 100 is embedded in an object 350.

As described above, the object information providing apparatus 100 may be mounted on the exterior of the object or embedded in the object.

The first light emitter 110 is divided into three types, one type comprising a singe light emitting element, another type comprising two or more light emitting elements, and the other type comprising a backlight of a LCD as a light emitting element. Hereinafter, a first embodiment in which a single light emitting element is provided, a second embodiment in which two or more light emitting elements are provided, and a third embodiment in which a light emitting element is a backlight of a LCD will be described in sequence.

The first embodiment in which a single light emitting element is provided will be described with reference to FIGS. 2A to 2C and FIGS. 4 to 10.

In the first embodiment, a single light emitting element is included in the first light emitter 110 of the object information providing apparatus 100 shown in FIG. 2A. In this case, the first controller 120 changes the brightness of the light emitting element of the first light emitter 110 for a predetermined time. That is, the first controller 120 determines the information of an object according to a brightness variation pattern of the light emitting element, the brightness variation pattern being emitted for a predetermined time.

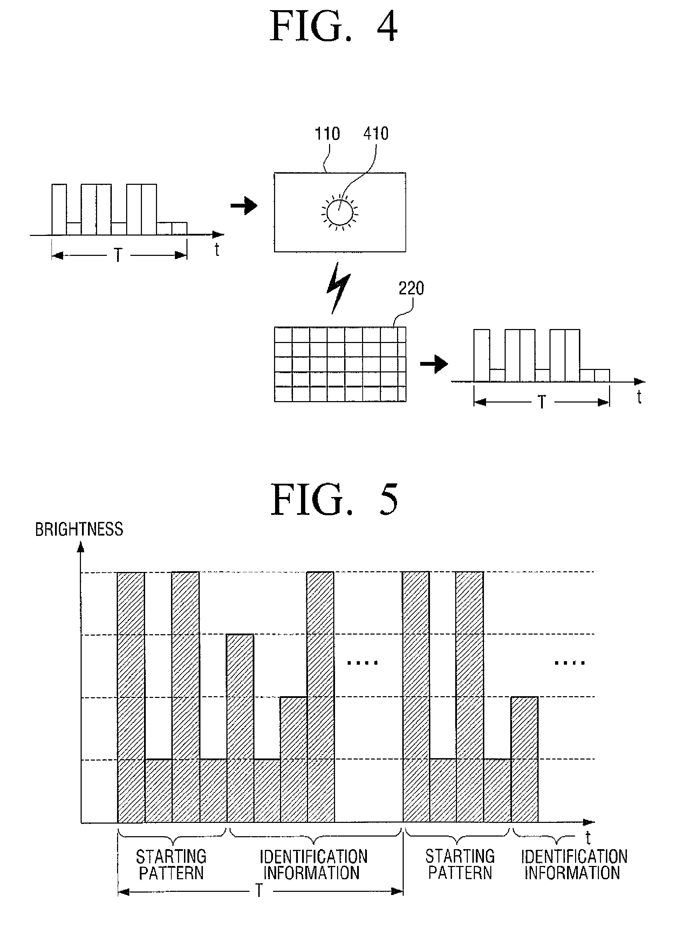

Then, the second photo sensor 220 of the object awareness apparatus 200 detects the brightness variation of the first light emitter 110. Also, the second controller 230 of the object awareness apparatus 200 recognizes the information of an object based on the brightness variation pattern of light detected by the second photo sensor 220 for the predetermined time. Detailed description thereof will be provided below with reference to FIG. 4.

FIG. 4 is a view schematically illustrating a process of transmitting information of an object if a single light emitting element 410 is included in the first light emitter 110 according to the first exemplary embodiment of the present invention. As shown in FIG. 4, the first controller 120 applies a driving signal such that the light emitting element 410 emits bright light and dark light in a specific pattern for a predetermined time T.

Then, the light emitting element 410 of the object information providing apparatus 100 emits the bright light and the dark light in a specific pattern, and the second photo sensor 220 of the object awareness apparatus 200 detects the brightness pattern of the emitted light. The second controller 230 of the object awareness apparatus 200 generates a data code based on the brightness variation pattern of the detected light. The second controller 230 recognizes the information of an object based on the generated data code.

If the single light emitting element 410 is provided as described above, the object information providing apparatus 100 provides the information of an object using the brightness variation pattern of the light emitting element 410 for the predetermined time T. The object awareness apparatus 200 recognizes the information of an object based on the brightness variation pattern of the detected light.

However, in order to display information of an object using a single light emitting element, a method for determining which brightness pattern indicates a starting point of the predetermined time T and which part indicates the information of an object may be required. Therefore, it may be necessary for the first controller 120 to regularly display a brightness variation pattern representing the start of the predetermined time T during a first period (e.g. during a period of four pulses). After that, it is necessary for the first controller 120 to indicate identification information of an object during a second period (a period of a remaining portion of the predetermined time T excluding the first period). This will be described in detail with reference to FIG. 5.

FIG. 5 is a graph to explain a method for indicating a starting pattern and identification information (i.e., a second pattern) by varying the brightness of the single light emitting element according to the first embodiment of the present invention. As shown in FIG. 5, the brightness variation pattern for representing information of an object using the single light emitting element comprises a starting pattern and an identification information pattern for the predetermined time T.

That is, the first controller 120 controls the first light emitting element 110 to indicate the starting pattern during the first period within a predetermined time and to indicate the brightness variation pattern representing identification information of the object during the second period within the predetermined time.

More specifically, as shown in FIG. 5, the first controller 120 emits the brightest light and the darkest light alternately two times, thereby displaying the starting pattern. Then, the first controller 120 displays the brightness variation pattern regarding the identification information during the remaining period.

In response to this, with respect to the light detected by the second photo sensor 220, the second controller 230 of the object awareness apparatus 200 recognizes the starting pattern, which is a brightness variation pattern representing the start of awareness or recognition, during the first period within the predetermined time T, and recognizes the brightness variation pattern representing the identification information of the object during the remaining period (second period) within the predetermined time T.

More specifically, the second controller 230 of the object awareness apparatus 200 recognizes the starting pattern when the brightest light and the darkest light are detected alternately two times. Then, the second controller 230 recognizes the brightness variation pattern of light detected after the starting pattern to be identification information of an object.

According to the method described above, the object information providing apparatus 100 can indicate a starting point of the information of an object and the object awareness apparatus 200 can recognize the starting pattern representing the start of information of an object.

If a plurality of objects is placed on the screen of the object awareness apparatus 200, each object needs to be allocated with a unique identification (ID) to be discriminated from other objects. In order to allocate a unique ID to each object, the object awareness apparatus 200 may be required to transmit a beacon signal to each object.

The beacon signal refers to a signal that informs which ID is allocated to each object. If the object awareness apparatus 200 generates a beacon signal and transmits it to each object, the object awareness apparatus 200 effectively allocates an ID to each object and prevents the ID from being duplicated among the objects.

Hereinafter, the object awareness apparatus 200 and the object information providing apparatus 100 to provide a beacon signal will be described with reference to FIG. 2B. FIG. 2B is a block diagram illustrating an object information providing apparatus which further comprises a first photo sensor 150 and an object awareness apparatus which further comprises a second light emitter 250 according to an exemplary embodiment of the present invention.

The object awareness apparatus 200 may require the second light emitter 250 to provide a beacon signal to each object. The object information providing apparatus 100 of each object may require the first photo sensor 150 to detect light emitted from the second light emitter 250.

Compared to that of FIG. 2A, the object information providing apparatus 100 of FIG. 2B further comprises the first photo sensor 150 and the object awareness apparatus 200 further comprises the second light emitter 250.

The second light emitter 250 comprises at least one light emitting element to project light onto the object information providing apparatus 100 and the second controller 230 provides a beacon signal to the object information providing apparatus 100 through the second light emitter 250.

The first photo sensor 150 detects light projected from the second light emitter 250 of the object awareness apparatus 200. The first controller 120 determines the ID of an object based on the beacon signal detected by the first photo sensor 150.

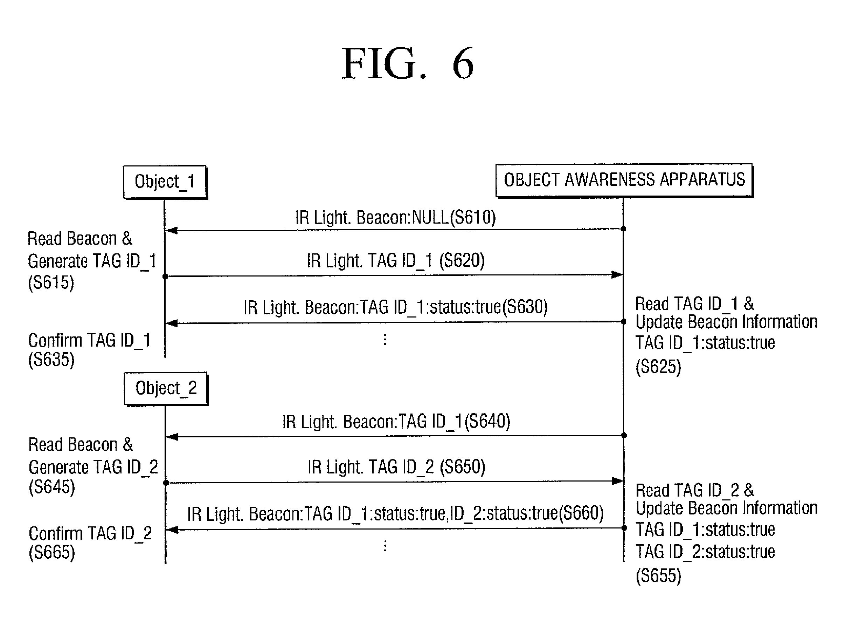

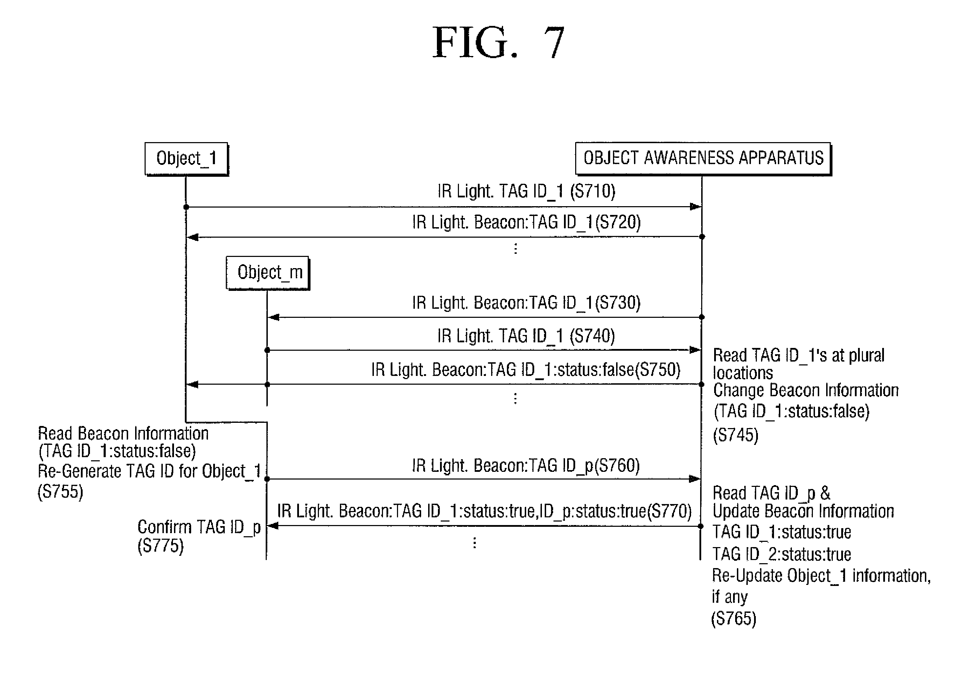

As described above, the object information providing apparatus 100 and the object awareness apparatus 200 of FIG. 2B set the ID using the beacon signal. Hereinafter, a process of setting an ID will be described with reference to FIGS. 6 and 7. Object_1, Object_2, Object_m of FIGS. 6 and 7 denote independent objects and the object information providing apparatus 100 of FIG. 2B is mounted on or embedded in each object (Object_1, Object_2, Object_m).

The infrared (IR) light transmitted from an object to the object awareness apparatus 200 is emitted (transmitted) from the first light emitter 110 and detected (received) by the second photo sensor 220. The IR light transmitted from the object awareness apparatus 200 to the objet is emitted (transmitted) from the second light emitter 250 and detected (received) by the first photo sensor 150.

FIG. 6 is a flowchart illustrating a process of allocating IDs to two objects according to a first exemplary embodiment of the present invention.

The object awareness apparatus 200 transmits to Object_1 a null beacon signal indicating that no ID is currently allocated through the second light emitter 250 (S610). The expression "IR Light. Beacon: NULL" means that a null beacon signal is transmitted in the form of IR light. Hereinafter, direct interpretation of the expression in each phase will be omitted.

Object_1 reads the received beacon signal and generates TAG ID (that is, an ID of the object) No. 1 (S615). Then, Object_1 transmits information indicating that its TAG ID is No. 1 through the first light emitter 110 of the object information providing apparatus 100 of Object_1 (S620).

Then, the object awareness apparatus 200 recognizes that the TAG ID_1 indicates Object_1 and updates the beacon information (S625). The object awareness apparatus 200 transmits the updated beacon signal to Object_1 (S630). Then, Object_1 confirms that the TAG ID_1 has been allocated to itself (S635).

After that, the object awareness apparatus 200 transmits a beacon signal indicating that the TAG ID_1 has been allocated to Object_1 to Object_2 (S640). The Object_2 reads the beacon signal and generates a TAG ID_2 to prevent duplication of ID (S645). Object_2 informs the object awareness apparatus 200 that the TAG ID_2 is allocated to itself (S650). Then, the object awareness apparatus 200 recognizes that the TAG ID_2 has been allocated to Object_2 and updates the beacon signal (S655). The object awareness apparatus 200 transmits the updated beacon signal to Object_2 (S660). The Object_2 confirms that the TAG ID_2 has been allocated to itself (S665).

Through the above process, Object_1 and Object_2 are allocated with TAG IDs without a collision using the beacon signal.

FIG. 7 is a flowchart illustrating a process of allocating an ID if an object (Object-m) having an unchangeable ID is provided. In FIG. 7, Object_m is an object which exclusively uses the TAG ID_1.

Object_1 requests the object awareness apparatus 200 to allocate TAG ID_1 to itself (S710). Then, the object awareness apparatus 200 transmits a beacon signal indicating that the TAG ID_1 has been allocated to Object_1 (S720).

The object awareness apparatus 200 also transmits the beacon signal indicating that the TAG ID_1 has been allocated to Object_1 to Object_m (S730).

After that, if Object_m requests the object awareness apparatus 200 to allocate the TAG ID_1 to itself (S740), the object awareness apparatus 200 recognizes that the TAG ID_1 is used for a plurality of objects and thus changes the beacon signal to a beacon signal "Beacon: TAG ID_1: Status: false" meaning that there is a collision in the TAG ID_1 (S745). Then, the object awareness apparatus 200 transmits the changed beacon signal to Object_1 (S750).

Then, Object_1 reads the beacon signal and generates a TAG ID_p (S755). Object_1 requests the object awareness apparatus 200 to allocate the TAG ID_p to itself (S760). Then, the object awareness apparatus 200 allocates the TAG ID_p to Object_1 and allocates the TAG ID_1 to Object_m, and accordingly updates the beacon signal (S765). After that, the object awareness apparatus 200 transmits the updated beacon signal to Object_1 (S770). Then, the object_1 confirms that TAG ID_p has been allocated to itself (S775).

As described above, even if an object exclusively uses a TAG ID, IDs are allocated without a collision.

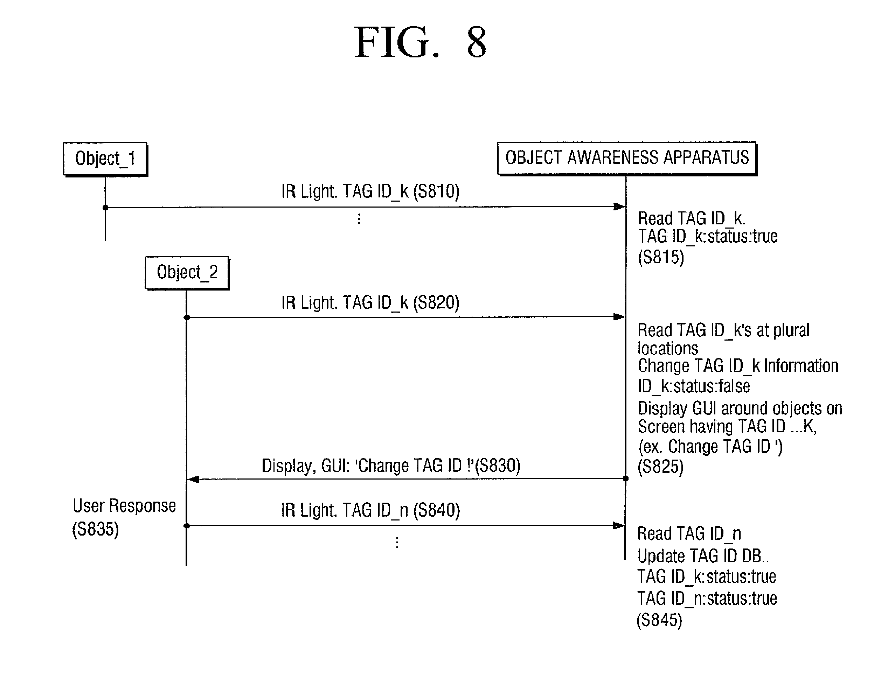

If there is a collision in the ID, the object awareness system may provide an ID change menu to the user so that the ID is changed and allocated without a beacon signal. This will be described with reference to FIG. 8. FIG. 8 is a flowchart illustrating a process of displaying a GUI on the screen to change an ID if the ID is duplicated according to an exemplary embodiment of the present invention.

In FIG. 8, Object_1 and Object_2 each denotes an independent object and the object information providing apparatus 100 of FIG. 2A is mounted on or embedded in each of Object_1 and Object_2.

Accordingly, in FIG. 8, the IR light transmitted from an object to the object awareness apparatus 200 is emitted (transmitted) from the first light emitter 110 and detected (received) by the second photo sensor 220.

Object_1 transmits a request for allocation of a TAG ID_k to the object awareness apparatus 200 (S810). Then, the object awareness apparatus 200 allocates the TAG ID_k to Object_1 (S815).

After that, if Object_2 transmits a request for allocation of the TAG ID_k to the object awareness apparatus 200 (S820), the object awareness apparatus 200 acknowledges that there is a collision in the TAG ID_k and generates a GUI to provide a TAG ID change request message (S825). The object awareness apparatus 200 displays the GUI regarding the TAG ID change request message on the screen 218 (S830).

Then, the user changes the ID to a TAG ID_n by manipulating Object_2 (S835). Object_2 transmits a request for allocation of the TAG ID_n to the object awareness apparatus 200 (S840).

The object awareness apparatus 200 updates a TAG ID database so as to indicate that the TAG ID_n has been allocated to Object_2 (S845).

As described above, if the GUI to change the ID is displayed on the screen 218 of the object awareness apparatus 200, the collision of the ID can be avoided without using a beacon signal.

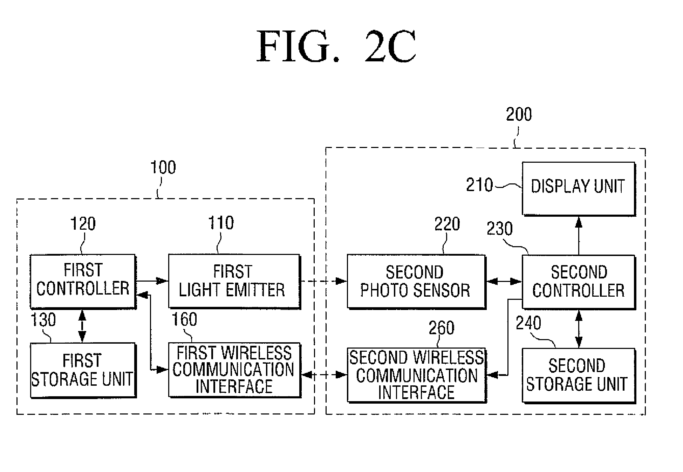

The object information providing apparatus 100 and the object awareness apparatus 200 may communicate with each other through a wireless communication interface (e.g. a wireless LAN or Bluetooth). An object awareness system in this case is illustrated in FIG. 2C.

FIG. 2C is a block diagram illustrating an object information providing apparatus 100 and an object awareness apparatus 200 each of which further comprises a wireless communication interface according to an exemplary embodiment of the present invention.

As shown in FIG. 2C, the object information providing apparatus 100 further comprises a first wireless communication interface 160 connected to communicate with the object awareness apparatus 200. The first controller 120 transmits Internet Protocol (IP) information of an object to the object awareness apparatus 200 through the first wireless communication interface 160.

Likewise, the object awareness apparatus 200 further comprises a second wireless communication interface 260 connected to communicate with the object information providing apparatus 100. The second controller 230 receives the IP information of the object from the object information providing apparatus 100 through the second wireless communication interface 260.

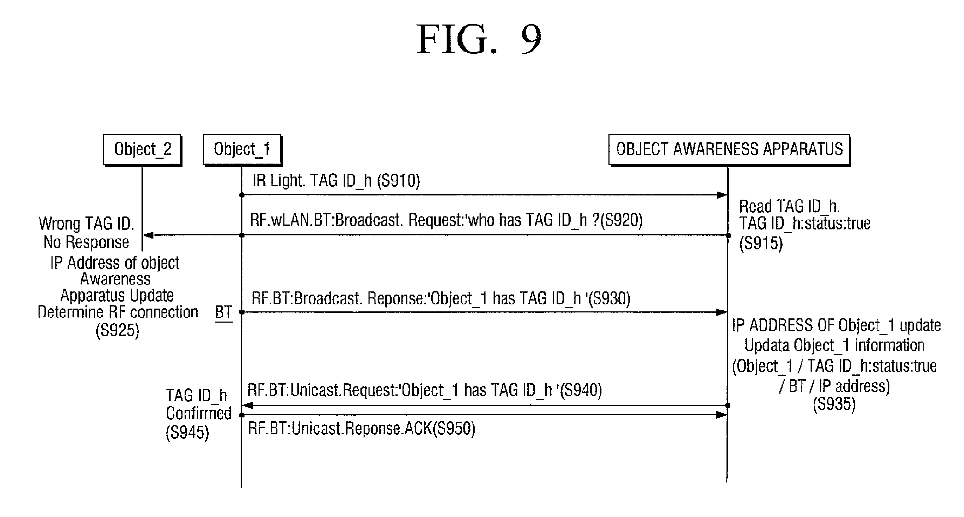

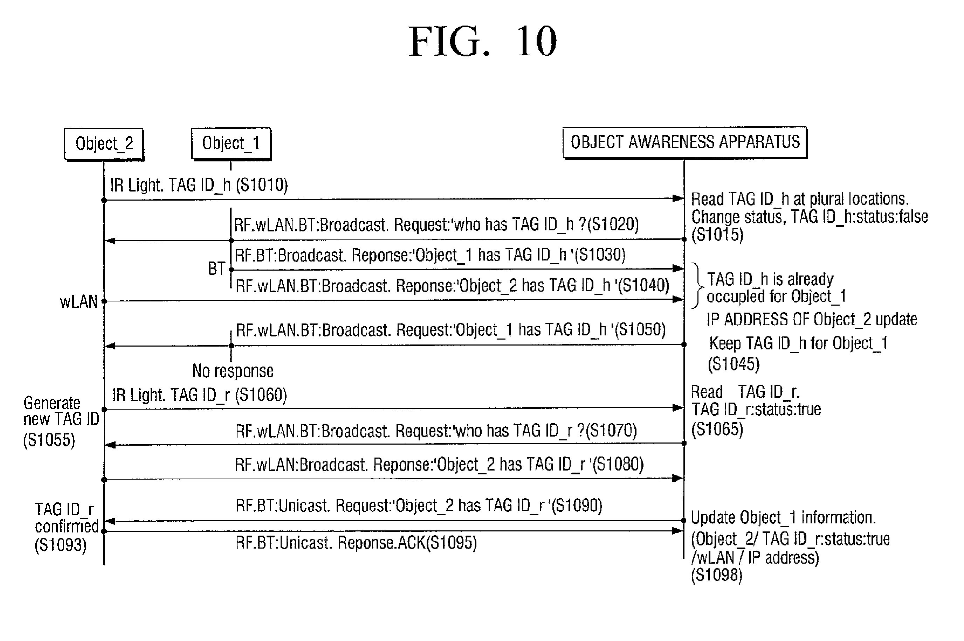

A method for communicating through a wireless communication interface will be described in detail with reference to FIG. 9 and 10.

In FIGS. 9 and 10, Object_1 and Object_2 denote independent objects and the object information providing apparatus 100 of FIG. 2C is mounted on or embedded in each object (Object_1 or Object_2).

Accordingly, in FIGS. 9 and 10, the IR light transmitted from the object to the object awareness apparatus 200 is emitted (transmitted) from the first light emitter 110 and detected (received) by the second photo sensor 220.

Also, in Object_1, the first wireless communication interface 160 supports only the Blutetooth (BT), and in Object_2, the first wireless communication interface 160 supports both the Bluetooth and the wireless LAN.

FIG. 9 is a flowchart illustrating a process of transmitting IP information using the wireless LAN and the Bluetooth according to a first exemplary embodiment of the present invention.

Object_1 transmits a request for allocation of a TAG ID_h using IR light (S910). Then, the object awareness apparatus 200 allocates the TAG ID_h to Object_1 (S915) and broadcasts information indicating which object uses the TAG ID_h through the wireless LAN and the Bluetooth (S920).

Object_1 recognizes the IP address of the object awareness apparatus 200 using the broadcasted information and sets a connection with the Bluetooth (S925). After that, Object_1 informs the object awareness apparatus 200 that Object_1 has the TAG ID_h through the Bluetooth (S930).

Then, the object awareness apparatus 200 matches the IP address of Object_1 with the TAG ID_h to update information regarding Object_1 (S935).

After that, the object awareness apparatus 200 transmits a message confirming that the TAG ID_h is used by Object_1 to Object_1 in the unicast method (S940). Object_1 confirms the use of the TAG ID_h (S945) and transmits an ACK message to the object awareness apparatus 200 in the unicast method.

Through the above-described process, Obejct_1 sets communication with the object awareness apparatus 200 through the Bluetooth.

Hereinafter, a process of allocating an ID through a wireless communication interface if there is a collision of he ID will be described with reference to FIG. 10. FIG. 10 is a flowchart illustrating a process of allocating an ID using the wireless LAN and the Bluetooth if the ID is duplicated according to a first exemplary embodiment of the present invention.

Object_2 transmits a request for allocation of a TAG ID_h to the object awareness apparatus 200 through IR light (S1010). Then, the object awareness apparatus 200 acknowledges that there is a collision in the TAG ID_h (S1015) and broadcasts a query about which object uses the TAG ID_h through the wireless LAN and the Bluetooth (S1020).

Then, Object_1 informs the object awareness apparatus 200 that the TAG ID_h is already occupied by Object_1 through the Bluetooth (S1030). Since Object_2 requests the TAG ID_h thereafter, Object_1 informs the object awareness apparatus 200 that the TAG ID_h is in use through the wireless LAN (S1040).

The object awareness apparatus 200 acknowledges that the TAG ID_h is already occupied by Object_1 (S1045) and informs Object_2 of this (S1050). Then, Object_2 generates a new TAG ID_r (S1055) and transmits a request for allocation of the TAG ID_r to the object awareness apparatus 200 through the IR light (S1060).

The object awareness apparatus 200 confirms that the TAG ID_r has been allocated (S1065) and broadcasts a query on which object uses the TAG ID_r (S1070). Then, Object_2 informs the object awareness apparatus 200 that the TAG ID_r is occupied by Object_2 (S1080).

After that, the object awareness apparatus 200 and Object_2 performs mutual confirming operations (S1090, S1093, S1095) and then the object awareness apparatus 200 matches the IP address of Object_2 with the TAG ID_r, thereby updating the information regarding the Object_1 (S1098).

As described above, the object awareness apparatus 200 can prevent the collision of the ID using the wireless communication interface. Also, the object awareness apparatus 200 matches the ID of the object with the IP address of the object and thus is aware of which ID is allocated to an object.

In the above example of FIGS. 9 and 10, the connection is set through the wireless communication interface even if the object awareness apparatus 200 is not connected with Object_1. However, Object_1 may be placed on the screen of the object awareness apparatus 200 after being connected with the object awareness apparatus 200.

In this case, the object awareness apparatus 200 and Object_1 are already of aware of their respective Media Access Control (MAC) addresses and IP addresses. Accordingly, if Object_1 is placed on the screen of the object awareness apparatus 200, Obect_1 transmits its ID information to the object awareness apparatus 200 using the IR light.

Then, the object awareness apparatus 200 obtains the MAC address and the IP address of Object_1 from the already stored data base information and sets a communication with Object_1. The data base information comprises ID information, MAC address information, and IP address information of the object information providing apparatus connected to the object awareness apparatus 200. If the information on Object_1 is not stored in the second storage unit 240 of the object awareness apparatus 200, the object awareness apparatus 200 may receive the information on Object_1 from an external data base through the Internet.

That is, the object awareness apparatus 200 is aware of the object using the ID information of the object which is stored in the data base stored in the second storage unit 240 of the object awareness apparatus 200 or in the external data base.

Up to now, how the object awareness system is aware of the information of an object if the first light emitter 100 includes a single light emitting element according to an exemplary embodiment of the present invention was described in detail.

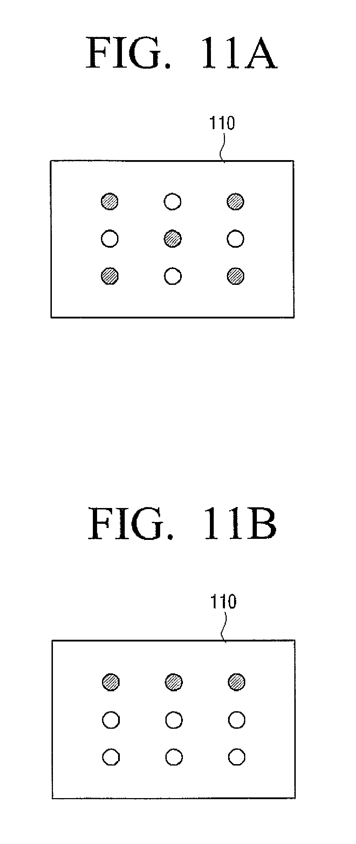

Hereinafter, a second embodiment in which the first light emitter 110 comprises two or more light emitting elements will be described with reference to FIGS. 11A and 11B. FIGS. 11A and 11B are views illustrating a light emitting pattern when 9 light emitting elements are included in the first light emitters 110 according to a second exemplary embodiment of the present invention.

The object awareness system has the configuration shown in FIG. 2A. The first controller 120 of the object information providing apparatus 100 regulates the brightness of each of the two or more light emitting elements. That is, the first controller 120 provides information of an object based on the light emitting pattern which is formed by the two or more light emitting elements.

If the object awareness apparatus 200 detects two or more lights, the object awareness apparatus 200 determines the information of an object based on the light emitting pattern formed by the two or more lights.

For example, the information of an object may be displayed using the 9 light emitting elements as shown in FIGS. 11A and 11B. In FIGS. 11A and 11B, the 9 light emitting elements are arranged in a grid pattern.

In FIG. 11A, the light emitting elements of the first light emitter 110 form a light emitting pattern in the shape of the letter "X". In FIG. 11B, the light emitting elements of the first light emitter 110 form a light emitting pattern in the shape of "---".

Diverse light emitting patterns may be formed using the 9 light emitting elements. The number of possible light emitting patterns formed by using the 9 light emitting elements is 2⁹ so that very diverse patterns can be provided and thus information of diverse objects can be also provided.

Although the information of an object is provided with the light emitting pattern formed by a plurality of light emitting elements included in the first light emitter 110 in the second embodiment, the information of an object may be provided by combination of the methods of the first embodiment and the second embodiment.

More specifically, the first controller 120 of the object information providing apparatus 100 provides information of an object based on the light emitting pattern and the brightness variation pattern which are formed by two or more light emitting elements for a predetermined time. Also, if two or more lights are detected, the second controller 230 of the object awareness apparatus 200 determines information of an object based on the light emitting pattern and the brightness variation pattern which are formed by the two or more lights detected for a predetermined time.

As such, if the first light emitter includes two or more light emitting elements, it is possible to provide information of an object in various ways.

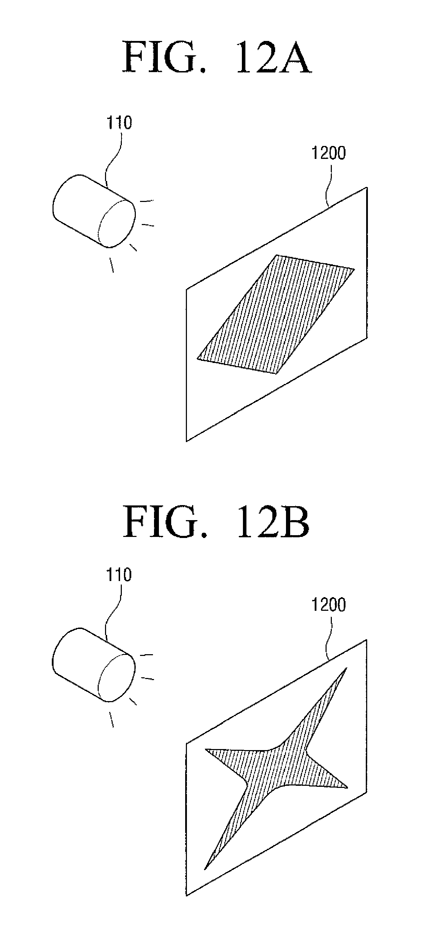

Hereinafter, the first light emitter 110 which is used as a backlight for a LCD panel 1200 will be described with reference to FIGS. 12A and 12B. FIGS. 12A and 12B are views illustrating a pattern which is displayed on a LCD screen if the LCD screen is included in the object information providing apparatus 100 according to a third exemplary embodiment of the present invention.

In this case, the object information providing apparatus 100 of FIG. 2A further comprises a LCD panel 1200. The first light emitter 110 provides a backlight to the LCD panel 1200. The first controller 120 displays an image of a pattern corresponding to the information of an object on the screen of the LCD panel 1200.

If light is detected from the display image of the object information providing apparatus 100, the second controller 230 of the object awareness apparatus 200 determines the information of an object based on the detected display image.

For example, FIG. 12A illustrates an image of a diamond shape displayed on the LCD screen, and FIG. 12B illustrates an image of a star shape.

Besides these, the object information providing apparatus 100 can display various types of images using the LCD screen and thus provides information of more diverse objects.

According to various embodiments of the present invention described above, the at least one light emitting element is provided and the object information providing apparatus 100 is provided for controlling the light emitting state of the at least one light emitting element so as to provide information of an object to the object awareness apparatus 200 in the form of light, so that information of more diverse objects can be provided.

In particular, since the light emitting element included in the object information providing apparatus 100 directly emits the light, it is possible to actively provide or change the information of an object. Also, as the number of light emitting elements increases, thousands of types of patterns can be displayed, and thus, information perceivable by the object awareness apparatus 200 becomes diversified.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An object information providing apparatus which provides information of an object to an object awareness apparatus, the object information providing apparatus comprising:
a light emitter which comprises at least one light emitting element; and
a controller which controls a light emitting state of the at least one light emitting element so as to provide the information of the object to the object awareness apparatus in the form of light.

2. The object information providing apparatus as claimed in claim 1, wherein the controller changes the light emitting state of the at least one light emitting element in order to change information indicated by the light emitter.

3. The object information providing apparatus as claimed in claim 1 or 2, wherein the object information providing apparatus is mounted on the object and the information of the object is information of the object on which the object information providing apparatus is mounted.

4. The object information providing apparatus as claimed in any one of claims 1 to 3, wherein the light emitter comprises a single light emitting element, and the controller changes a brightness of the light emitting element for a predetermined time so as to provide information of an object which is determined according to a brightness variation pattern of the light emitting element for the predetermined time.

5. The object information providing apparatus as claimed in claim 4, wherein the controller controls the light emitting element to display a brightness variation pattern representing a start during a first period within the predetermined time and display a brightness variation pattern representing identification (ID) information of the object during a second period within the predetermined time.

6. The object information providing apparatus as claimed in claim 4, further comprising a photo sensor which detects light projected from the object awareness apparatus,
wherein the controller determines an ID of the object based on a beacon signal which is detected by the photo sensor.

7. The object information providing apparatus as claimed in claim 4, further comprising a wireless communication interface which is communicably connected with the object awareness apparatus, wherein the controller transmits IP information of the object to the object awareness apparatus through the wireless communication interface.

8. The object information providing apparatus as claimed in any one of claims 1 to 3, wherein the light emitter comprises two or more light emitting elements, and the controller regulates a brightness of each of the two or more light emitting elements to provide the information of the object which is determined according to a light emitting pattern formed by the two or more light emitting elements.

9. The object information providing apparatus as claimed in any one of claims 1 to 3, wherein the light emitter comprises two or more light emitting elements, and the controller changes a brightness of each of the two or more light emitting elements for a predetermined time to provide the information of the object which is determined according to a light emitting pattern and a brightness variation pattern which are formed by the two or more light emitting elements for the predetermined time.

10. The object information providing apparatus as claimed in any one of claims 1 to 3, further comprising a LCD panel,
wherein the light emitter provides a backlight to the LCD panel, and the controller controls the LCD panel to display a specific pattern to provide the information of the object which is determined by the pattern displayed by the LCD panel.

11. The object information providing apparatus as claimed in any one of claims 1 to 10, wherein the light emitting element is an infrared light emitting element.

12. The object information providing apparatus as claimed in claim 1 or 2, wherein the light emitting element and the controller are embedded in the object.

13. An object awareness apparatus which receives information of an object from an object information providing apparatus and is aware of the object, the object awareness apparatus comprising:
a photo sensor which detects light emitted from the object information providing apparatus; and
a controller which is aware of information and location of the object based on the detected light.

14. The object awareness apparatus as claimed in claim 13, further comprising a display unit which displays a specific image on a screen,
wherein the controller is aware of the information of the object and the location of the object on the screen based on the detected light when the object information providing apparatus is placed on the screen.

15. The object awareness apparatus as claimed in claim 13 or 14, wherein, if one light is detected, the controller is aware of the information of the object based on a brightness variation pattern of the detected light emitted for a predetermined time.
